# DEMANDE DE BREVET EUROPEEN

(11) **EP 4 563 872 A1**
(43) Date de publication de la demande: **04.06.2025**
(21) Numéro de dépôt: 24212891.6
(22) Date de dépôt: 14.11.2024
(51) Int. Cl.: F17C 1/00

(54) **RÉSERVOIR DE STOCKAGE D'UN FLUIDE LIQUÉFIÉ, DISPOSITIF DE RÉGLAGE, INSTALLATION ET PROCÉDÉ D'ASSEMBLAGE D'UN TEL RÉSERVOIR**

(30) Priorité: 28.11.2023 FR 2313195
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: BOUIN, Marius, 38360 SASSENAGE (FR); COHARD, Pierrick, 38360 SASSENAGE (FR)
(74) Mandataire: Air Liquide

(57) **Abrégé**

Réservoir (1) de stockage d'un fluide liquéfié, par exemple de l'hydrogène liquide, comprenant une enveloppe interne (11) destinée à contenir le fluide liquéfié et une enveloppe externe (12) destinée à protéger l'enveloppe interne (11), l'enveloppe interne (11) et l'enveloppe externe (12) étant espacées d'un intervalle (13) pourvu d'un système d'isolation thermique, l'enveloppe interne (11) et l'enveloppe externe (12) comprenant chacune une portion centrale tubulaire, respectivement interne (111) et externe (121), s'étendant suivant une direction principale (X) du réservoir (1), l'enveloppe interne (11) et l'enveloppe externe (12) comprenant chacune également des fonds opposés, respectivement fonds internes (112a, 112b) et fonds externes (122a, 122b),
caractérisé en ce qu'il comprend un bossage (14) porté par l'enveloppe interne (11) suivant une direction perpendiculaire à la direction principale (X), et s'étendant dans l'intervalle (13) entre l'enveloppe interne (11) et l'enveloppe externe (12), le bossage (14) étant accessible depuis une ouverture (15) refermable de l'enveloppe externe (12), le bossage (14) étant configuré pour coopérer avec un dispositif tiers (2) pour entraîner l'enveloppe interne (11) et l'enveloppe externe (12) dans un mouvement relatif l'une par rapport à l'autre selon la direction perpendiculaire à la direction (X) principale.

## Description

Selon un premier aspect, l'invention concerne un réservoir de stockage d'un fluide cryogénique liquéfié. Le fluide considéré peut être de l'hydrogène liquéfié.

Selon un deuxième aspect, l'invention concerne un dispositif de réglage de coaxialité pour un tel réservoir.

Selon un troisième aspect, l'invention concerne une installation comprenant un tel réservoir et un tel dispositif.

Enfin, selon un quatrième aspect, l'invention concerne un procédé d'assemblage d'un tel réservoir utilisant un tel dispositif de réglage.

Le réservoir de stockage d'un fluide liquéfié comprend de façon générale une enveloppe interne destinée à contenir le fluide et une enveloppe externe destinée à protéger l'enveloppe interne. L'enveloppe externe et l'enveloppe interne sont espacées d'un intervalle pourvu d'un système d'isolation thermique, par exemple sous vide. L'enveloppe interne et l'enveloppe externe comprennent chacune une portion centrale tubulaire, respectivement interne et externe, qui s'étendent suivant la direction principale du réservoir. En outre, l'enveloppe interne et l'enveloppe externe présentent chacune des fonds opposés, respectivement fonds internes et fonds externes.

Pour assembler le réservoir décrit ci-dessus, dans un premier temps, une première extrémité de l'enveloppe externe est fermée au moyen d'un premier fond pour former une enveloppe externe ouverte à une deuxième extrémité opposée. Ensuite, l'enveloppe externe semi-ouverte est disposée verticalement pour recevoir en son sein l'enveloppe interne. Enfin, la deuxième extrémité est à son tour fermée au moyen d'un deuxième fond, avant une dernière étape qui consiste à fixer de manière permanente les fonds externes sur la portion tubulaire centrale externe de l'enveloppe externe.

Aux fins de cette fixation qui peut être réalisée par exemple par soudage, l'enveloppe externe fermée est maintenue dans une position verticale par rapport au sol, avec l'un des fonds externes en position supérieure, et l'autre des fonds externes en position inférieure. La position verticale est privilégiée car elle permet de centrer l'enveloppe interne par rapport à l'enveloppe externe, avant de réaliser le soudage des fonds externes sur la portion tubulaire centrale externe de l'enveloppe externe.

Si le soudage du fond supérieur sur la portion tubulaire de l'enveloppe externe peut être réalisé sans grandes difficultés, le soudage du fond inférieur reste une manoeuvre compliquée.

Dès lors, il apparaît un besoin de repenser la conception du réservoir de stockage de sorte à faciliter son assemblage, et notamment le soudage des fonds externes sur la portion cylindrique centrale de l'enveloppe externe.

A cet effet, selon un premier aspect, l'invention concerne un réservoir de stockage d'un fluide liquéfié, conforme à la définition générique qu'en donne le préambule ci-dessus.

Selon ce premier aspect de l'invention, le réservoir est essentiellement caractérisé en ce qu'il comprend un bossage qui est porté par l'enveloppe interne et s'étend dans l'intervalle entre l'enveloppe interne et l'enveloppe externe, suivant une direction perpendiculaire à la direction principale du réservoir. Le bossage est accessible depuis une ouverture refermable de l'enveloppe externe. En outre, le bossage est configuré pour coopérer avec un dispositif tiers de sorte à entraîner l'enveloppe interne et l'enveloppe externe dans un mouvement relatif l'une par rapport à l'autre selon la direction perpendiculaire à la direction principale.

Ainsi, en prévoyant un bossage tel que décrit ci-dessus, l'invention ouvre la possibilité d'ajuster la position de l'enveloppe interne par rapport à l'enveloppe externe en opérant depuis l'extérieur du réservoir, et selon une direction facilitant les manoeuvres de l'opérateur. L'invention ouvre également la possibilité de maintenir coaxiales les enveloppes interne et externe, grâce à une coopération entre le bossage et un dispositif tiers de géométrie complémentaire.

Par « dispositif tiers » on entend un dispositif qui ne fait pas partie du réservoir, mais qui peut coopérer de manière réversible avec le bossage pour faciliter l'assemblage du réservoir. Il peut s'agir d'un dispositif de réglage de coaxialité entre l'enveloppe externe et l'enveloppe interne du réservoir.

D'autres modes de réalisation du réservoir comprennent les caractéristiques ci-dessous :
- le bossage est configuré pour coopérer par vissage avec le dispositif tiers;
- le bossage présente un filetage interne (ou externe) destiné à coopérer avec un filetage externe (ou interne) du dispositif tiers;
- le réservoir comprend un réceptacle fixé à l'enveloppe interne;
- le réceptacle forme avec l'enveloppe interne un boîtier destiné à recevoir un adsorbant;
- le bossage est formé sur le réceptacle;
- le bossage forme un conduit de passage de l'adsorbant depuis l'ouverture de l'enveloppe externe vers le boîtier;
- le réceptacle est positionné au niveau de l'un des fonds internes de l'enveloppe interne;
- le réceptacle comprend une paroi latérale s'étendant suivant la direction principale ainsi qu'une base transversale à la paroi latérale;
- le bossage s'étend depuis la paroi latérale du réceptacle;
- les fonds internes de l'enveloppe interne portent chacun un premier organe de centrage s'étendant suivant la direction principale;
- les fonds externes de l'enveloppe externe portent chacun un deuxième organe de centrage s'étendant suivant la direction principale;
- les organes de centrage respectifs du fond interne et du fond externe situés d'un même côté du réservoir sont emboîtés l'un dans l'autre;
- l'enveloppe externe est équipée d'au moins une projection destinée à recevoir le dispositif tiers;
- la au moins une projection de l'enveloppe externe est formée à proximité de l'ouverture de l'enveloppe externe;
- la au moins une projection de l'enveloppe externe comprend une branche externe et une branche interne, la branche interne étant plus courte que la branche externe;
- les branches de la au moins une projection de l'enveloppe externe sont reliées entre elles par un pont formant une assise plane destinée à recevoir le dispositif tiers.

Selon un deuxième aspect, l'invention concerne un dispositif de réglage de coaxialité pour un réservoir de stockage défini précédemment. Le dispositif comprend ::
- un support s'étendant suivant une direction principale;
- un manchon configuré pour être monté à travers un passage du support suivant une direction perpendiculaire à la direction principale, le manchon comprenant une première extrémité pourvue d'un organe de réglage, tel qu'un filetage;
- une poignée fixée au manchon et destinée à entraîner le manchon en rotation par rapport au support lorsque le dispositif est en service, la poignée et l'organe de réglage étant positionnés de part et d'autre du support ;
- un organe de liaison configuré pour fixer réversiblement le manchon au support aux fins de stockage et/ou transport du dispositif.

D'autres modes de réalisation du dispositif de réglage de coaxialité comprennent les caractéristiques ci-dessous :
- le manchon comprend une deuxième extrémité pourvue d'une plaque ;
- l'organe de liaison est configuré pour fixer la plaque au support ;
- le support comprend un corps comprenant deux faces principales opposées : une première face principale et une deuxième face principale ;
- le passage destiné à recevoir le manchon s'étend entre les deux faces principales du support.

Selon un troisième aspect, l'invention concerne une installation comprenant un réservoir de stockage et un dispositif de réglage tels que définis précédemment.

Le support du dispositif de réglage est configuré pour prendre appui sur l'enveloppe externe du réservoir. Le manchon du dispositif de réglage est configuré pour s'engager dans l'ouverture formée au niveau de l'enveloppe externe du réservoir de sorte à coopérer avec le bossage porté par l'enveloppe interne du réservoir. La poignée du dispositif de réglage est configurée pour entraîner le manchon dans un mouvement relatif par rapport au bossage.

Selon un quatrième aspect, l'invention concerne un procédé d'assemblage du réservoir de stockage tel que décrit ci-dessus. Le procédé utilise le dispositif de réglage de coaxialité tel que décrit ci-dessus. Le procédé comprend les étapes successives suivantes :
- une étape de fermeture d'une première extrémité de l'enveloppe externe par montage d'un premier fond externe pour former une enveloppe externe ouverte à une deuxième extrémité opposée;
- une étape d'insertion de l'enveloppe interne dans l'enveloppe externe ouverte ;
- une étape d'insertion du dispositif de réglage à travers l'ouverture de l'enveloppe externe, conduisant à une coopération entre le manchon du dispositif de réglage et le bossage porté par l'enveloppe interne ;
- une étape de réglage de coaxialité entre l'enveloppe interne et l'enveloppe externe grâce à un mouvement relatif entre le manchon du dispositif de réglage et le bossage porté par l'enveloppe interne
- une étape de fermeture de la deuxième extrémité de l'enveloppe externe par montage d'un deuxième fond externe.

D'autres particularités et avantages apparaîtront à la lecture de la description ci-après, faite en référence aux figures suivantes dans lesquelles :
[Fig. 1] est une vue isométrique illustrant un réservoir de stockage et un dispositif de réglage de coaxialité selon l'invention, le dispositif de réglage étant monté sur le réservoir de stockage.
[Fig. 2] est une vue isométrique illustrant un détail de la [Fig. 1] ;
[Fig. 3] est une vue de coupe plane illustrant le réservoir et le dispositif de la [Fig. 1], le réservoir comprenant une enveloppe externe et une enveloppe interne ;
[Fig. 4] est une vue de coupe illustrant un détail de la [Fig. 3] ;
[Fig. 5] est une vue isométrique illustrant le réservoir de stockage de la [Fig. 1] seul, sans le dispositif de réglage ;
[Fig. 6] est une vue isométrique illustrant le dispositif de la [Fig. 1] seul, sans le réservoir de stockage;
[Fig. 7] est une vue isométrique illustrant l'enveloppe externe de la [Fig. 2] dans une configuration semi-ouverte et dans une position verticale;
[Fig. 8] est une vue isométrique illustrant un positionnement de l'enveloppe interne au-dessus de l'enveloppe externe ouverte;
[Fig. 9] est une vue isométrique illustrant un début d'insertion de l'enveloppe interne dans l'enveloppe externe ouverte ;
[Fig. 10] est une vue isométrique illustrant le réservoir de stockage dans une configuration horizontale.

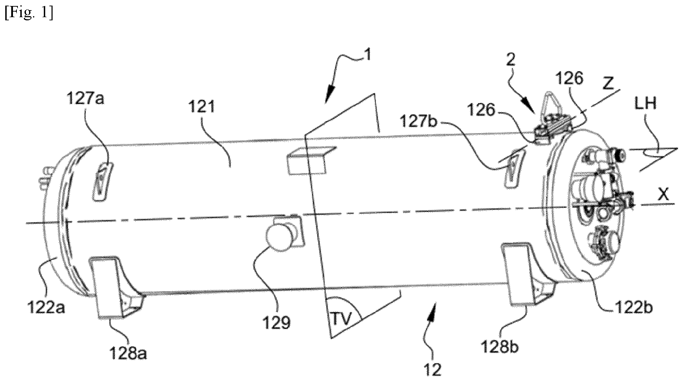

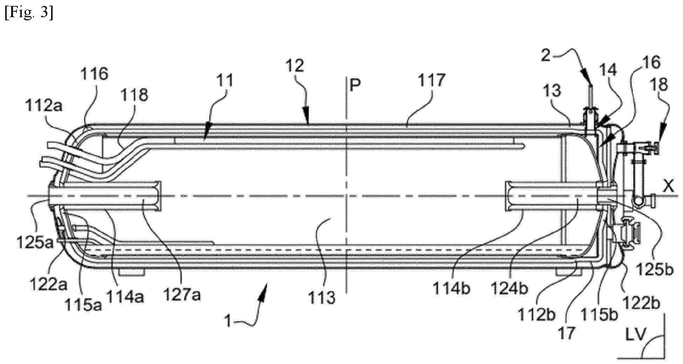

Comme illustré aux [Fig. 1] et [Fig. 3], l'invention concerne un réservoir 1 de stockage à double enveloppe pour le stockage par exemple d'un fluide cryogénique.

Le réservoir 1 s'étend suivant une direction principale longitudinale X. En outre, le réservoir 1 présente un plan médian transversal vertical TV, un plan médian longitudinal vertical LV et un plan médian longitudinal horizontal LH. Les plans TV, LV, LH sont définis en considérant la direction principale X parallèle au sol.

En référence à la [Fig. 3], le réservoir 1 comprend une enveloppe interne 11 destinée à contenir le fluide liquéfié, et une enveloppe externe 12 recouvrant l'enveloppe interne 11. L'enveloppe externe 12 est destinée à protéger l'enveloppe interne 11. L'enveloppe interne 11 et l'enveloppe externe 12 sont espacées de façon à former un intervalle 13 pourvu d'un système d'isolation thermique.

Le système d'isolation thermique peut être formé par un vide créé dans l'intervalle 13 et/ou contenir un isolant thermique, par exemple du type "multicouches" ("MLI").

L'enveloppe interne 11 et l'enveloppe externe 12 comprennent chacune une portion centrale cylindrique à section circulaire, respectivement portion centrale cylindrique interne 111 et portion centrale cylindrique externe 121, qui s'étendent suivant la direction principale X du réservoir 1. En outre, l'enveloppe interne 11 et l'enveloppe externe 12 comprennent chacune des fonds opposés, respectivement fonds internes 112a, 122b, et fonds externes 122a, 122b. Ces fonds 112a, 122b; 122a, 122b peuvent être bombés.

La portion centrale interne 111 et les fonds internes 112a, 112b de l'enveloppe interne 11 forment un logement étanche 113 destiné à contenir le fluide. De même, la portion centrale externe 121 et les fonds externes 122a, 122b de l'enveloppe externe 12 forment un logement dans lequel est disposée l'enveloppe interne 11.

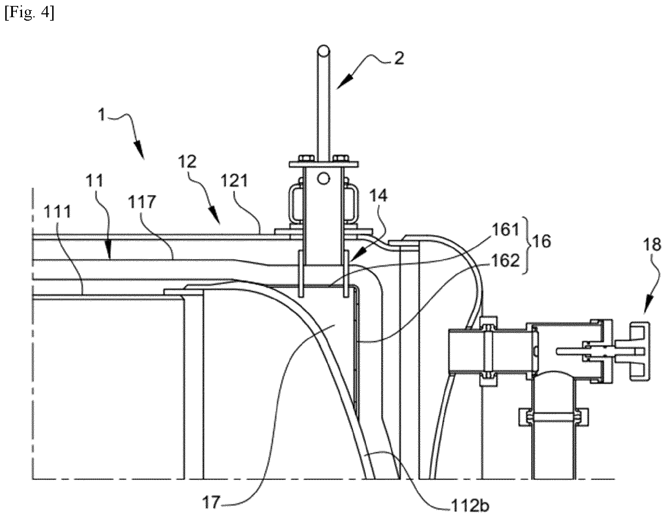

Dans le mode de réalisation illustré aux [Fig. 3] et [Fig. 4], les fonds internes 112a, 112b ont une concavité tournée vers l'extérieur du réservoir 1. L'un des fonds externes 122a, 122b, ici le fond externe 122b présente une concavité tournée vers l'intérieur du réservoir 1. L'autre des fonds externes 122a, 122b, ici le fond externe 122a, présente une concavité tournée vers l'extérieur du réservoir 1.

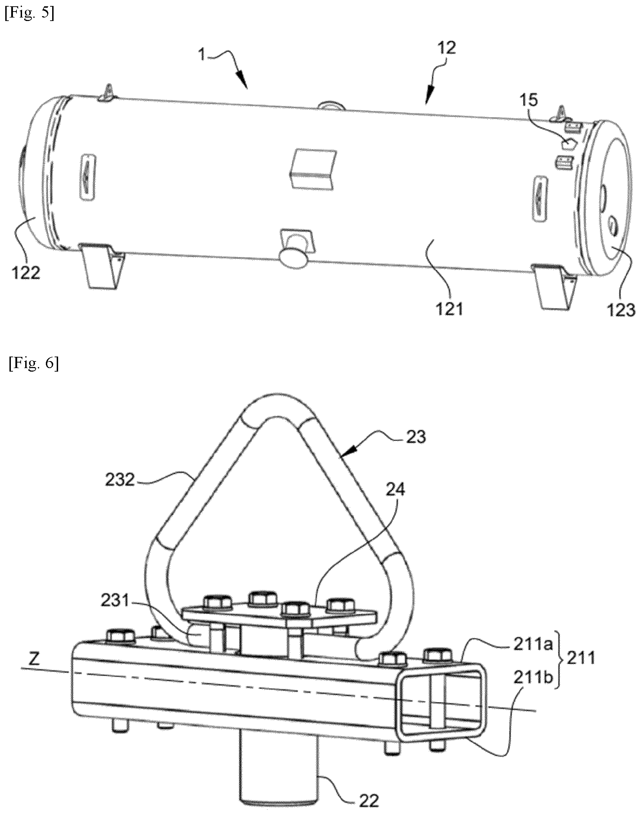

Selon l'invention, le réservoir 1 comprend un bossage 14 qui est porté par l'enveloppe interne 11 selon une direction perpendiculaire à la direction principale X du réservoir 1, et s'étend dans l'intervalle 13 entre l'enveloppe interne 11 et l'enveloppe externe 12. Le bossage 14 est accessible depuis une ouverture 15 refermable formée au niveau de l'enveloppe externe 12. L'ouverture 15 est visible à la [Fig. 5]. En outre, le bossage 14 est configuré pour coopérer avec un dispositif 2 tiers.

Par « dispositif tiers », on entend un dispositif qui ne fait pas partie du réservoir 1 lorsqu'il est en fonctionnement, mais qui peut être couplé de manière réversible au bossage 14 porté par l'enveloppe interne 11. Le dispositif 2 tiers présente une géométrie complémentaire de celle du bossage 14. Il peut s'agir d'un dispositif 2 de réglage de coaxialité tel que décrit plus loin dans la description.

Ainsi, en prévoyant un bossage 14 tel que décrit ci-dessus, l'invention ouvre la possibilité d'ajuster la position relative de l'enveloppe interne 11 par rapport à l'enveloppe externe 12 par une opération exécutée et contrôlée depuis l'extérieur du réservoir 1, et selon une direction facilitant les manoeuvres de l'opérateur. En outre, l'invention ouvre la possibilité d'ajuster la position relative de l'enveloppe interne 11 par rapport à l'enveloppe externe 12 à partir d'un élément du réservoir 1, à savoir le bossage 14, destiné à être dissimulé dans l'intervalle 13 entre l'enveloppe interne 11 et l'enveloppe externe 12.

De façon avantageuse, après l'opération de montage et de réglage, l'ouverture 15 de l'enveloppe externe 12 est refermée de façon étanche au moyen d'un couvercle de sorte qu'après fermeture de cette ouverture 15, le bossage 14 devient invisible et inaccessible de l'extérieur du réservoir 1.

De façon avantageuse, comme mieux illustré à la [Fig. 3], les fonds internes 112a, 112b peuvent être pourvus chacun d'un organe 114a, 114b de centrage qui s'étend suivant la direction principale X du réservoir 1, vers l'intérieur de l'enveloppe interne 11. Les organes 114a, 114b de centrage, respectivement premier organe 114a de centrage et deuxième organe 114b de centrage, sont donc disposés en regard l'un de l'autre, et plus spécifiquement de manière symétrique par rapport au plan médian transversal vertical TV du réservoir 1.

Il convient de noter que le premier organe 114a de centrage et le deuxième organe 114b de centrage peuvent être fixés ou être solidaires des fonds internes 112a, 112b de l'enveloppe interne 11 par l'intermédiaire de supports de montage, respectivement premier support 115a de montage et deuxième support 115b de montage.

Toujours en référence à la [Fig. 3], les fonds externes 122a, 122b de l'enveloppe externe 12 sont pourvus chacun d'un organe de centrage 124a, 124b qui s'étend suivant la direction principale X longitudinale du réservoir 1, vers l'intérieur du réservoir 1. Ces organes de centrage, respectivement troisième organe 124a de centrage et quatrième organe 124b de centrage sont disposés en regard l'un de l'autre, et de préférence, de manière symétrique par rapport au plan TV transversal vertical médian du réservoir 1.

Il convient de noter que le troisième organe 124a de centrage et le quatrième organe 124b de centrage peuvent être fixés aux fonds externes 122a, 122b de l'enveloppe externe 12 par l'intermédiaire de supports de montage, respectivement troisième support 125a de montage et quatrième support 125b de montage.

Les organes 114a, 114b de centrage fixés sur les fonds internes 112a, 112b de l'enveloppe interne 11 coopèrent respectivement avec les organes 124a, 124b de centrage fixés sur les fonds externes 122a, 122b de l'enveloppe externe 12 pour centrer l'enveloppe interne 11 par rapport à l'enveloppe externe 12. Autrement dit, les organes 114a, 114b ; 124a, 124b de centrage coopèrent pour assurer une coaxialité entre l'enveloppe interne 11 et l'enveloppe externe 12.

Plus spécifiquement, le premier organe 114a de centrage fixé sur le fond interne 112a de l'enveloppe interne 11 coopère avec le troisième 124a organe de centrage fixé sur le fond externe 122a de l'enveloppe externe 12. Le deuxième organe 112b de centrage fixé sur le fond interne 112b de l'enveloppe interne 11 coopère avec le quatrième 124b organe de centrage fixé sur le fond externe 122b de l'enveloppe externe 12.

Les organes 114a, 114b; 124a, 124b de centrage participent également au maintien de l'enveloppe interne 11 dans l'enveloppe externe 12.

De façon avantageuse, l'enveloppe interne 11 peut être pourvue d'au moins une oreille 116 de levage configurée pour recevoir un câble de manutention. En outre, l'enveloppe interne 11 peut être recouverte d'une couche 117 d'isolation thermique.

De façon avantageuse, comme illustré à la [Fig. 3], le réservoir 1 peut comprendre également un réceptacle 16 fixé à l'enveloppe interne 11 pour former un boîtier 17 destiné à recevoir un adsorbant. En particulier, le réceptacle 16 est fixé au niveau de l'un des fonds internes 112a, 112b de l'enveloppe interne 11, ici au niveau du fond interne 112b. L'enveloppe interne 11 et le réceptacle 16 peuvent former ainsi un sous-ensemble compact qui peut être recouvert par une même couche 117 d'isolation thermique.

En référence à la [Fig. 4], le réceptacle 16 comprend une paroi 161 latérale qui s'étend suivant la direction principale X du réservoir 1. Le réceptacle 16 comprend également une base 162 transversale à la paroi 161 latérale. La paroi 161 latérale porte le bossage 14.

Lorsque le réceptacle 16 est présent dans le réservoir 1, l'ouverture 15 de l'enveloppe externe 12 peut assurer une fonction supplémentaire, à savoir recevoir l'adsorbant. En outre, le bossage 14 peut assurer une fonction supplémentaire, à savoir assurer un passage de l'adsorbant depuis l'ouverture 15 de l'enveloppe externe 12 vers le boîtier 17.

Autrement dit, l'agencement du réceptacle 16 sur l'enveloppe interne 11 d'une part, et du bossage 14 sur le réceptacle 16 d'autre part, simplifie la structure du réservoir 1 en conférant au bossage 14 une double fonction : recevoir un dispositif 2 de réglage de coaxialité et assurer le passage de l'adsorbant vers le boîtier 17.

De façon avantageuse, l'enveloppe interne 11 est équipée de tubulures 118 destinées à alimenter le logement 113 de stockage de fluide et/ou à soutirer le fluide de ce logement 113. Ces tubulures 118 peuvent être montées à travers l'un des fonds internes 112a, 112b, ici le fond interne 112a. En outre, ces tubulures 118 comprennent par exemple chacune une portion interne s'étendant à l'intérieur du logement 113 et une portion externe s'étendant en dehors du logement 113.

Il convient de noter que les portions externes des tubulures 118 peuvent également être montées à travers l'un des fonds externes 122a, 122b de l'enveloppe externe 12, ici le fond externe 122a.

De façon avantageuse, le réservoir 1 est équipé de préférence d'un raccord et/ou vanne 18 destiné à créer un vide dans l'intervalle 13 compris entre l'enveloppe interne 11 et l'enveloppe externe 12. La vanne 18 est positionnée par exemple sur l'un des fonds externes 122a, 122b de l'enveloppe externe 12, ici sur le fond externe 122a.

De façon avantageuse, en référence de nouveau à la [Fig. 1], l'enveloppe externe 12 peut comporter au moins une paire d'oreilles 127a, 127b de levage disposées au niveau de la portion centrale externe 121. Les oreilles 127a, 127b de levage sont configurées pour recevoir un câble permettant une manutention du réservoir 1.

Dans l'exemple illustré, l'enveloppe externe 12 est pourvue de deux paires d'oreilles 127a, 127b de levage. Les paires sont positionnées de part et d'autre du plan médian longitudinal vertical LV du réservoir 1. Dans chaque paire, les oreilles 127a, 127b sont disposées de part et d'autre du plan TV médian transversal vertical.

De façon avantageuse, en référence à la [Fig. 1], l'enveloppe externe 12 présente au moins une paire de pattes 128a, 128b disposées au niveau de la portion centrale externe 121. Les pattes 128a, 128b permettent au réservoir 1 d'être reçu de manière horizontale sur un support plan.

Dans l'exemple illustré, l'enveloppe externe 12 est pourvue de deux paires de pattes 128a, 128b. Les paires sont positionnées de part et d'autre du plan médian longitudinal vertical LV. Dans chaque paire, les pattes 128a, 128b sont disposées de part et d'autre du plan médian transversal vertical TV.

De façon avantageuse, en référence à la [Fig. 1], l'enveloppe externe 12 présente au moins une paire de tourillons 129 de manutention permettant de basculer le réservoir 1 d'une position verticale vers une position horizontale ou vice-versa. Les tourillons 129 sont positionnés au niveau du plan médian transversal vertical TV, et de part et d'autre du plan médian longitudinal vertical LV.

Selon un deuxième aspect, l'invention concerne un dispositif 2 de réglage de coaxialité entre l'enveloppe interne 11 et l'enveloppe externe 12 du réservoir 1 décrit ci-dessus.

En référence à la [Fig. 6], le dispositif 2 de réglage comprend un support 21 qui s'étend suivant une direction principale Z. Le dispositif 2 de réglage comprend également un manchon 22 monté à travers le support 21 suivant une direction perpendiculaire à la direction principale Z du support 21. Enfin, le dispositif 2 comprend une poignée 23 fixée au manchon 22 et destinée à prendre appui sur le support 21.

En particulier, le support 21 est destiné à être fixé sur la partie centrale 121 de l'enveloppe externe 12 du réservoir 1. Après fixation du support 21 sur la partie centrale 121 de l'enveloppe externe 12, la direction principale Z du support 21 est orthogonale à la direction principale Z du réservoir 1 (voir [Fig. 1]).

En outre, le support 21 comprend un corps 211 qui présente deux faces principales opposées : une première face principale 211a destinée à servir d'appui à la poignée 23, et une deuxième face principale 211b destinée à être fixée sur la partie centrale 121 de l'enveloppe externe 12 du réservoir 1.

Enfin, le support 21 comprend un passage formé à travers le corps 211 du support 21, perpendiculairement à la direction principale Z du support 21. Le passage s'étend entre les faces principales 211a, 211b du corps 211 du support 21. Le passage est destiné à recevoir le manchon 22.

Le manchon 22 est destiné à s'engager dans l'ouverture 15 formée au niveau de l'enveloppe externe 12 du réservoir 1 pour coopérer avec le bossage 14 porté par l'enveloppe interne 11.

Par "coopérer", on entend le fait que le manchon 22 peut être emboîté dans le bossage 14 ou être enfilé le long du bossage 14, en vue d'un mouvement relatif entre le manchon 22 et le bossage 14 porté par l'enveloppe interne 11.

Le mouvement relatif entre le manchon 22 du dispositif 2 de réglage et le bossage 14 porté par l'enveloppe interne 11 du réservoir 1 conduit à un mouvement relatif entre l'enveloppe interne 11 et l'enveloppe externe 12 du réservoir 1. Ce mouvement relatif peut être une translation simple ou une translation/rotation autour de la direction principale du manchon 22, entraînant une translation de l'enveloppe interne 11 par rapport à l'enveloppe externe 12 suivant la direction principale du manchon 22.

Le mouvement relatif entre le manchon 22 du dispositif 2 de réglage et le bossage 14 porté par l'enveloppe interne 11 du réservoir 1 est rendu possible grâce à un premier organe de réglage formé au niveau du manchon 22 et un deuxième organe de réglage formé au niveau du bossage 14. Dans l'exemple illustré, le premier organe de réglage est un filetage externe au niveau du manchon 22. Le deuxième organe de guidage est un taraudage au niveau du bossage 14.

L'agencement d'organes de guidage décrit ci-dessus (filetage pour le manchon 22 et taraudage pour le bossage 14) convient pour un mode de réalisation dans lequel le manchon 22 est emboîté dans le bossage 14 porté par l'enveloppe interne 11 du réservoir 1. Dans un mode de réalisation (non illustré) dans lequel le manchon 22 est destiné à être enfilé le long du bossage 14 porté par l'enveloppe interne 11 du réservoir 1, le manchon 22 peut présenter un taraudage et le bossage peut présenter un filetage externe. Dans les deux cas ci-dessus, le manchon 22 est destiné à coopérer par vissage avec le bossage 14 porté par l'enveloppe interne 11 du réservoir 1.

D'autres types d'organe de réglage (ou types de liaison) entre le manchon 22 et le bossage 14 peuvent être envisagés aux fins d'entraîner une translation de l'enveloppe interne 11 par rapport à l'enveloppe externe 12 du réservoir 1. Par exemple, l'un entre le manchon 22 et le bossage 14 peut comporter comme organe de réglage un ergot. L'autre entre le manchon 22 et le bossage 14 peut comporter organe de réglage une rainure. La rainure est destinée à recevoir l'ergot, par exemple suivant une liaison de type baïonnette.

De façon avantageuse, le manchon 22 présente une extrémité supérieure équipée d'une plaque 24 de blocage. Cette plaque 24 est fixée réversiblement au support 21 au moyen d'un organe de liaison. Dans l'exemple illustré, l'organe de liaison comprend des vis disposées parallèlement au manchon 22.

L'organe de liaison permet de la sorte de maintenir le manchon 22 solidaire du support 21, par exemple aux fins de transport et/ou de rangement du dispositif 2 de réglage. En d'autres termes, l'organe de liaison empêche tout mouvement du manchon 22 par rapport au support 21 en dehors de l'utilisation du dispositif 2 de réglage.

Pour l'utilisation du dispositif 2 de réglage, et en particulier pour permettre un mouvement du manchon 22 par rapport au support 21 et par rapport au bossage 14, l'organe de liaison reliant le manchon 22 et le support 21 doit être retiré.

La poignée 23 comprend une tige 231 qui s'étend à travers le manchon 22 et un arceau 232 qui est relié à la tige 231. En particulier, la tige 231 est destinée à prendre appui sur l'une des faces principales 211a, 211b du support 21, ici la face 211a. L'arceau 232 forme un organe de préhension destiné à faciliter le mouvement du manchon 22 par rapport au bossage 14.

Afin de recevoir le support 21 du dispositif 2 de réglage, l'enveloppe externe 12 du réservoir 1 est pourvue d'au moins deux projections 126 radiales.

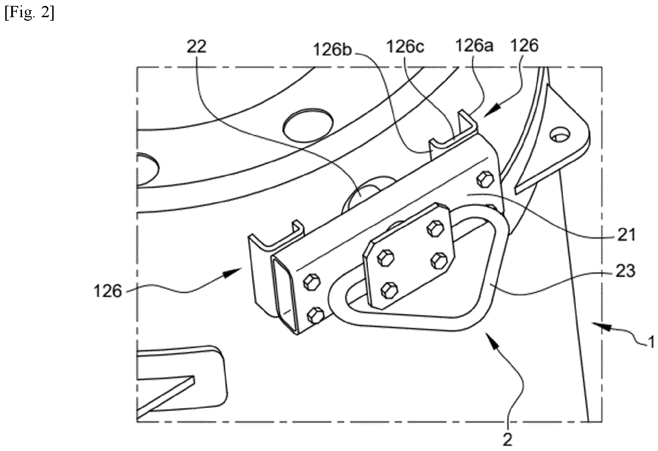

En particulier, les projections 126 radiales sont positionnées au niveau de la partie centrale externe 121 de l'enveloppe externe 12 (voir notamment [Fig. 1] et [Fig. 2]). En outre, les projections 126 radiales s'étendent suivant un pourtour de la partie centrale externe 121 de l'enveloppe externe 12. Enfin, les projections 126 radiales sont en décalage angulaire l'une par rapport à l'autre autour de la direction X principale du réservoir 1.

De façon avantageuse, les projections 126 radiales sont symétriques par rapport au plan médian longitudinal vertical LV du réservoir 1.

En référence à la [Fig. 2], les projections 126 radiales comprennent chacune une branche externe 126a et une branche interne 126b reliées entre elles par un pont 126c. Sur chaque projection 126 radiale, la branche externe 126a et la branche interne 126b sont parallèles entre elles et perpendiculaires au pont 126c. Le pont 126c forme une assise plane apte à recevoir le support 21 du dispositif 2 de réglage. Pour ce faire, la branche interne 126b présente une hauteur inférieure à celle de la branche externe 126a.

Les termes « interne » et « externe » sont définis ici par rapport au plan médian longitudinal vertical LV du réservoir 1 en considérant deux points quelconques situés sur un plan transversal vertical. Ainsi, le terme « interne » se rapporte au point le plus proche du plan médian longitudinal vertical LV. Le terme « externe » se rapporte au point le plus éloigné du plan médian longitudinal vertical LV.

Pour assembler le réservoir 1 décrit ci-dessus, l'invention introduit un procédé d'assemblage qui met en oeuvre le dispositif 2 de réglage de coaxialité décrit ci-dessus.

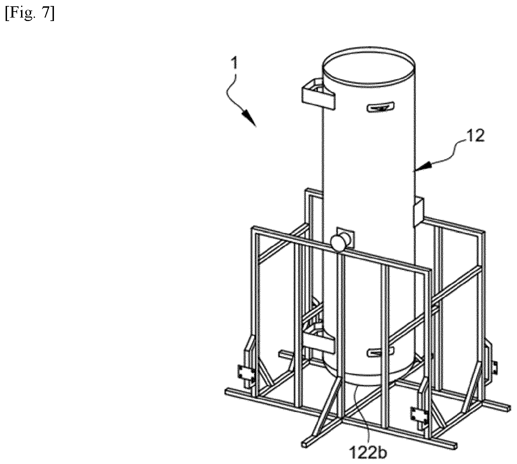

Une première étape du procédé consiste à fermer une première extrémité de l'enveloppe externe 12 par montage d'un premier fond externe 122b. On obtient ainsi une enveloppe externe 12 ouverte à une deuxième extrémité opposée. L'enveloppe externe 12 ouverte est illustrée à la [Fig. 7].

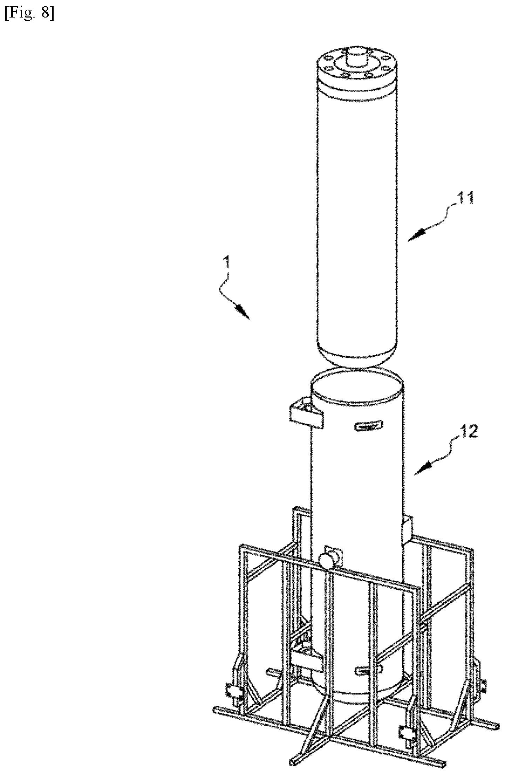

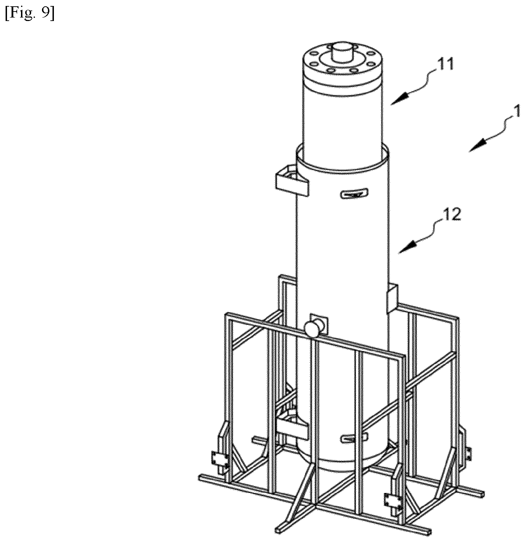

Dans une deuxième étape illustrée aux [Fig. 8], [Fig. 9], l'enveloppe interne 11 (assemblée) est positionnée en regard de l'enveloppe externe 12 ouverte, et en particulier au-dessus de l'enveloppe externe 12, puis insérée progressivement dans celle-ci.

Aux fins de cette deuxième étape, l'enveloppe 12 externe ouverte peut être disposée perpendiculairement au sol. L'extrémité fermée de l'enveloppe 12 externe occupe une position inférieure tandis que l'extrémité ouverte de l'enveloppe 12 externe occupe une position supérieure. Les organes 114b, 124b de centrage respectifs du fond interne 112b de l'enveloppe interne 11 et du fond externe 121b de l'enveloppe externe 12 coopèrent pour assurer un centrage de l'enveloppe interne 11 par rapport à l'enveloppe externe 12.

De façon avantageuse, en amont de cette deuxième étape, le procédé peut prévoir une opération de fixation du réceptacle 16 sur l'enveloppe interne 11 du réservoir 1, et une opération consistant à recouvrir le sous-ensemble formé par l'enveloppe interne 11 et le réceptacle 16 d'une couche 117 d'isolation thermique.

Dans une troisième étape, le dispositif 2 de réglage est monté à travers l'ouverture 15 de l'enveloppe externe 12. Ainsi, le manchon 22 du dispositif 2 de réglage coopère avec le bossage 14 porté par l'enveloppe interne 11.

Dans une quatrième étape, la position de l'enveloppe interne 11 par rapport à l'enveloppe externe 12 est ajustée par déplacement de l'une par rapport à l'autre suivant une direction perpendiculaire à la direction X principale du réservoir 1. Cet ajustement vise à aligner l'enveloppe interne 11 et l'enveloppe externe 12 sur un même axe, c'est-à-dire sur l'axe X principal du réservoir 1. En d'autres termes, cet ajustement vise à rendre coaxiales l'enveloppe interne 11 et l'enveloppe externe 12.

Il convient de noter que l'ajustement de la position de l'enveloppe interne 11 par rapport à l'enveloppe externe peut être effectué en vissant/dévissant le manchon 22 du dispositif 2 de réglage par rapport au bossage 14 porté par l'enveloppe interne 11 du réservoir 1. Ce vissage/dévissage génère un effort de traction sur l'enveloppe interne 11 dans la direction principale du manchon 22, tendant à déplacer l'enveloppe interne 11 par rapport à l'enveloppe externe 12 suivant la direction principale du manchon.

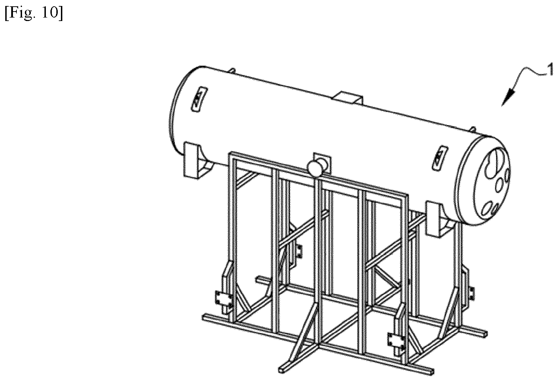

Une fois les deux enveloppes 11, 12 rendues coaxiales, le procédé peut prévoir une quatrième étape au cours de laquelle le réservoir 1 peut être basculé dans une position horizontale (voir [Fig. 10]). Au cours de cette étape, les deux enveloppes 11, 12 sont maintenues coaxiales grâce à une coopération entre le manchon 22 du dispositif 2 de réglage et le bossage 14.

Dans une cinquième étape, l'extrémité de l'enveloppe externe 12, restée ouverte jusque-là, est à son tour fermée par montage du deuxième fond externe 122a. On obtient ainsi une enveloppe externe 12 complètement fermée abritant une enveloppe interne 11 et un réceptacle 16.

Sur le réservoir 1 disposé horizontalement, le procédé prévoit une sixième étape au cours de laquelle les fonds externes 122a, 122b peuvent être soudés sur la portion centrale externe 121 de l'enveloppe externe 12 pour une fixation permanente. Un soudage réalisé sur un réservoir 1 disposé horizontalement est plus aisé qu'un soudage réalisé sur un réservoir disposé verticalement.

Enfin, après soudage des fonds externes 122a, 122b sur la partie centrale externe 121 de l'enveloppe externe 12, le dispositif 2 de réglage peut être retiré du réservoir 1. L'ouverture 15 d'accès au bossage 14 peut alors être refermée au moyen d'un bouchon (non illustré) masquant ainsi le bossage 14.

## Revendications

1. Réservoir (1) de stockage d'un fluide liquéfié, par exemple de l'hydrogène liquide, comprenant une enveloppe interne (11) destinée à contenir le fluide liquéfié et une enveloppe externe (12) destinée à protéger l'enveloppe interne (11), l'enveloppe interne (11) et l'enveloppe externe (12) étant espacées d'un intervalle (13) pourvu d'un système d'isolation thermique, l'enveloppe interne (11) et l'enveloppe externe (12) comprenant chacune une portion centrale tubulaire, respectivement interne (111) et externe (121), s'étendant suivant une direction (X) principale du réservoir (1), l'enveloppe interne (11) et l'enveloppe externe (12) comprenant chacune également des fonds opposés, respectivement fonds internes (112a, 112b) et fonds externes (122a, 122b),
le réservoir comprenant en outre un bossage (14) porté par l'enveloppe interne (11), suivant une direction perpendiculaire à la direction (X) principale, et s'étendant dans l'intervalle (13) entre l'enveloppe interne (11) et l'enveloppe externe (12), le bossage (14) étant accessible depuis une ouverture (15) refermable de l'enveloppe externe (12), le bossage (14) étant configuré pour coopérer avec un dispositif tiers (2) de sorte à entraîner l'enveloppe interne (11) et l'enveloppe (12) dans un mouvement relatif l'une par rapport à l'autre selon la direction perpendiculaire à la direction (X) principale,
**caractérisé en ce que** qu'il comprend un réceptacle (16) fixé à l'enveloppe interne (11) et formant avec l'enveloppe interne (11) un boîtier (17) destiné à recevoir un adsorbant, le bossage (14) étant formé sur le réceptacle (16) et formant un conduit de passage de l'adsorbant depuis l'ouverture (15) de l'enveloppe externe (12) vers le boîtier (17).

2. Réservoir (1) selon la revendication 1, **caractérisé en ce que** le bossage (14) est configuré pour coopérer par vissage avec le dispositif tiers (2), le bossage (14) présentant un filetage interne (ou externe) destiné à coopérer avec un filetage externe (ou interne) du dispositif tiers (2).

3. Réservoir (1) selon l'une quelconque des revendications précédentes, **caractérisé en ce que** le réceptacle (16) est positionné au niveau de l'un des fonds (112a, 112b) internes de l'enveloppe interne (11), le réceptacle (16) comprenant une paroi (161) latérale s'étendant suivant la direction (X) principale ainsi qu'une base (162) transversale à la paroi (161) latérale, le bossage (14) s'étendant depuis la paroi latérale (161) du réceptacle (16).

4. Réservoir (1) selon l'une quelconque des revendications précédentes, **caractérisé en ce que** les fonds internes (112a, 112b) de l'enveloppe interne (11) portent chacun un premier organe de centrage (114a, 114b) s'étendant suivant la direction principale (X), et **en ce que** les fonds externes (122a, 122b) de l'enveloppe externe (12) portent chacun un deuxième organe de centrage (124a, 124b) s'étendant suivant la direction principale (X), les organes de centrage (114a, 114b ; 124a, 124b) respectifs du fond interne (112a, 112b) et du fond externe (122a, 122b) situés d'un même côté du réservoir (1) étant emboîtés l'un dans l'autre.

5. Réservoir (1) selon l'une quelconque des revendications précédentes, **caractérisé en ce que** l'enveloppe externe (12) est équipée d'au moins une projection (126) destinée à recevoir le dispositif tiers (2), la au moins une projection (126) étant formée à proximité de l'ouverture (15) de l'enveloppe externe (12) et comprenant une branche externe (126a) et une branche interne (126b), les branches (126a, 126b) étant reliées entre elles par un pont (126c) formant une assise plane destinée à recevoir le dispositif tiers (2), la branche interne (126b) étant plus courte que la branche externe (126a).

6. Dispositif (2) de réglage de coaxialité pour un réservoir (1) de stockage selon l'une quelconque des revendications 1 à 5, le dispositif (2) comprenant :
- un support (21) s'étendant suivant une direction principale (Z) ;
- un manchon (22) configuré pour être monté à travers un passage du support (21) suivant une direction perpendiculaire à la direction principale (Z), le manchon (22) comprenant une première extrémité pourvue d'un organe de réglage, tel qu'un filetage;
- une poignée (23) fixée au manchon (22) et destinée à entrainer le manchon (22) en rotation par rapport au support (21) lorsque le dispositif (2) est en service, la poignée (23) et l'organe de réglage étant positionnés de part et d'autre du support (21) suivant la direction principale (Z) ;
- - un organe de liaison configuré pour fixer réversiblement le manchon (22) au support (21) aux fins de stockage et/ou transport du dispositif (2).

7. Dispositif (2) selon la revendication précédente, **caractérisé en ce que** le manchon (22) comprend une deuxième extrémité pourvue d'une plaque (24), l'organe de liaison étant configuré pour fixer la plaque (24) au support (21).

8. Dispositif (2) selon l'une quelconque des revendications 6 ou 7, **caractérisé en ce que** le support (21) comprend un corps (211) comprenant deux faces principales opposées : une première face principale (211a) et une deuxième face principale (211b), et **en ce que** le passage destiné à recevoir le manchon (22) s'étend entre les deux faces principales (211a, 211b) du support (21).

9. Installation comprenant un réservoir (1) de stockage selon l'une quelconque des revendications 1 à 5, et un dispositif (2) de réglage selon l'une quelconque des revendications 6 à 8, **caractérisée en ce que** le support (21) du dispositif (2) de réglage est configuré pour prendre appui sur l'enveloppe externe (12) du réservoir (1), le manchon (22) du dispositif (2) de réglage est configuré pour s'engager dans l'ouverture (15) formée au niveau de l'enveloppe externe (12) du réservoir (1) de sorte à coopérer avec le bossage (14) porté par l'enveloppe interne (11) du réservoir (1), la poignée (23) du dispositif (2) de réglage est configurée pour entraîner le manchon (22) dans un mouvement relatif par rapport au bossage (14).

10. Procédé d'assemblage d'un réservoir (1) de stockage selon l'une quelconque des revendications 1 à 5, le procédé utilisant le dispositif (2) de réglage selon l'une quelconque des revendications 6 à 8, le procédé comprenant :
- une étape de fermeture d'une première extrémité de l'enveloppe externe (12) par montage d'un premier fond externe (122b) pour former une enveloppe externe (12) ouverte à une deuxième extrémité opposée;
- une étape d'insertion de l'enveloppe interne (11) dans l'enveloppe externe (12) ouverte;
- une étape d'insertion du dispositif (2) de réglage à travers l'ouverture (15) de l'enveloppe externe (12), conduisant à une coopération entre le manchon (22) du dispositif (2) de réglage et le bossage (14) porté par l'enveloppe interne (11) ;
- une étape de réglage de coaxialité entre l'enveloppe interne (11) et l'enveloppe externe (12) grâce à mouvement relatif entre le manchon (21) du dispositif (2) de réglage et le bossage (15) porté par l'enveloppe interne (11);
- une étape de fermeture d'une deuxième extrémité de l'enveloppe externe (12) par montage d'un deuxième fond externe (122a).
